# EUROPEAN PATENT APPLICATION

(11) **EP 4 682 693 A1**
(43) Date of publication of application: **21.01.2026**
(21) Application number: 24769936.6
(22) Date of filing: 12.03.2024
(51) Int. Cl.: G06F 3/0481

(54) **INFORMATION DISPLAY METHOD AND APPARATUS, INFORMATION SENDING METHOD AND APPARATUS, DEVICE AND STORAGE MEDIUM**

(30) Priority: 14.03.2023 CN 202310266473
(71) Applicant: Beijing Zitiao Network Technology Co., Ltd., Beijing 100190 (CN)
(72) Inventor: XU, Jiannan, Beijing 100028 (CN); TANG, Bo, Beijing 100028 (CN)
(74) Representative: Marks & Clerk LLP
(86) International application number: PCT/CN2024/081236
(87) International publication number: WO 2024/188245

(57) **Abstract**

Embodiments of the present disclosure provide an information display method and apparatus, an information sending method and apparatus, a device and a storage medium. The information display method includes: receiving a target trigger operation of a first user; and displaying target feedback information in response to the target trigger operation, the target feedback information being sent by a second user, the first user having performed a preset interactive operation on at least one media content posted by the second user, and the target feedback information being generated by the second user based on the preset interactive operation.

## Description

The present application claims priority to Chinese Patent Application No. 202310266473.5, entitled "INFORMATION DISPLAY METHOD AND APPARATUS, INFORMATION SENDING METHOD AND APPARATUS, DEVICE AND STORAGE MEDIUM", filed with the China National Intellectual Property Administration on March 14, 2023, which is incorporated by reference in its entirety.

### FIELD

Embodiments of the present disclosure relate to the field of computer technology, and in particular, to an information display method and apparatus, an information sending method and apparatus, a device, and a storage medium.

### BACKGROUND

In the prior art, after a creator posts media content, a viewer can view the media content posted by the creator and interact with the media content. However, an interaction method between the creator and the viewer is relatively limited.

### SUMMARY

Embodiments of the present disclosure provide an information display method and apparatus, an information sending method and apparatus, a device, and a storage medium.

In a first aspect, embodiments of the present disclosure provide an information display method, including:
receiving a target trigger operation of a first user; and
displaying target feedback information in response to the target trigger operation, the target feedback information being sent by a second user, the first user having performed a preset interactive operation on at least one media content posted by the second user, and the target feedback information being generated by the second user based on the preset interactive operation.

In a second aspect, embodiments of the present disclosure further provide an information sending method, including:
displaying a feedback panel in response to a feedback panel display operation of a second user, the feedback panel being configured to generate target feedback information corresponding to a preset interactive operation; and
sending the target feedback information to at least part of first users in response to an information sending operation acting inside the feedback panel, the first users being users who have performed the preset interactive operation on at least one media content posted by the second user.

In a third aspect, embodiments of the present disclosure further provide an information display apparatus, including:
an operation receiving module, configured to receive a target trigger operation of a first user; and
an information display module, configured to display target feedback information in response to the target trigger operation, the target feedback information being sent by a second user, the first user having performed a preset interactive operation on at least one media content posted by the second user, and the target feedback information being generated by the second user based on the preset interactive operation.

In a fourth aspect, embodiments of the present disclosure further provide an information sending apparatus, including:
a panel display module, configured to display a feedback panel in response to a feedback panel display operation of a second user, the feedback panel being configured to generate target feedback information corresponding to a preset interactive operation; and
an information sending module, configured to send the target feedback information to at least part of first users in response to an information sending operation acting inside the feedback panel, the first users being users who have performed the preset interactive operation on at least one media content posted by the second user.

In a fifth aspect, embodiments of the present disclosure further provide an electronic device, including:
one or more processors; and
a memory, configured to store one or more programs, where
the one or more programs, when executed by the one or more processors, cause the one or more processors to implement the information display method or the information sending method according to the embodiments of the present disclosure.

In a sixth aspect, embodiments of the present disclosure further provide a computer-readable storage medium, having a computer program stored therein. The program, when executed by a processor, implements the information display method or the information sending method according to the embodiments of the present disclosure.

According to the information display method and apparatus, the information sending method and apparatus, the device, and the storage medium according to the embodiments of the present disclosure, the target trigger operation of the first user is received; and in response to the target trigger operation, the target feedback information is displayed and is sent by the second user, the first user has performed the preset interactive operation on the at least one media content posted by the second user, and the target feedback information is generated by the second user based on the preset interactive operation.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of an information display method according to embodiments of the present disclosure;
FIG. 2 is a schematic diagram of the display of target feedback information according to embodiments of the present disclosure;
FIG. 3 is a schematic flowchart of another information display method according to embodiments of the present disclosure;
FIG. 4 is a schematic diagram of the display of another target feedback information according to embodiments of the present disclosure;
FIG. 5 is a schematic flowchart of an information sending method according to embodiments of the present disclosure;
FIG. 6 is a schematic diagram of the display of a feedback panel according to embodiments of the present disclosure;
FIG. 7 is a schematic diagram of the display of another feedback panel according to embodiments of the present disclosure;
FIG. 8 is a block diagram of a structure of an information display apparatus according to embodiments of the present disclosure;
FIG. 9 is a block diagram of a structure of an information sending apparatus according to embodiments of the present disclosure; and
FIG. 10 is a schematic diagram of a structure of an electronic device according to embodiments of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, according to the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the method for sending the prompt information to the user may be, for example, a pop-up window, in which the prompt information may be presented in text. Further, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

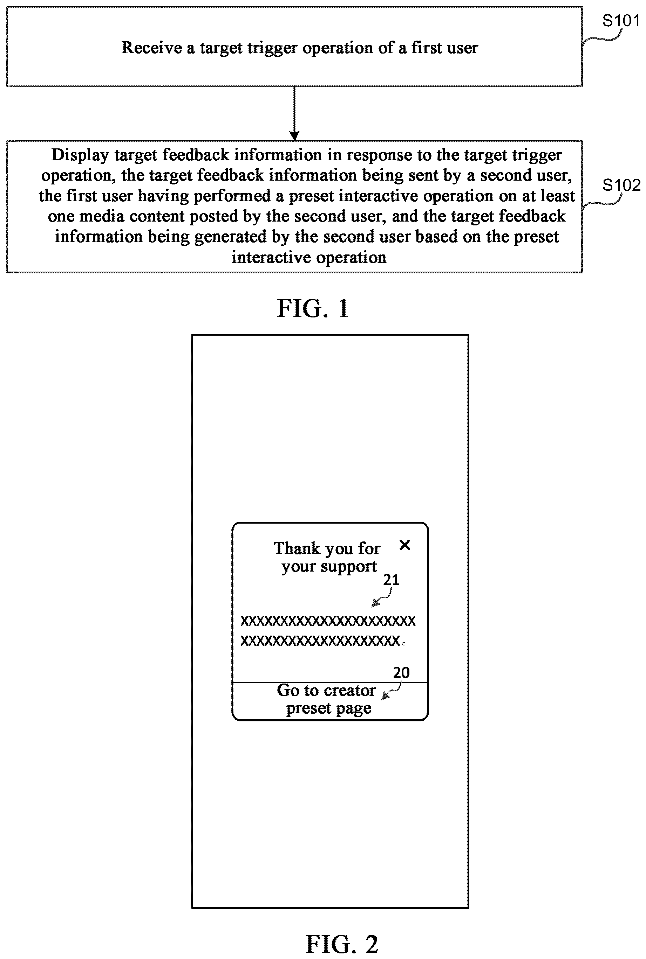

FIG. 1 is a schematic flowchart of an information display method according to embodiments of the present disclosure. The method may be performed by an information display apparatus. The apparatus may be implemented by software and/or hardware, may be configured in an electronic device, and typically, may be configured in a mobile phone or a tablet personal computer. The information display method according to these embodiments of the present disclosure is applicable to a scenario where feedback information is sent by a poster to a viewer who has performed a preset interactive operation on media content posted by the poster, and is particularly suitable for a scenario where feedback information is sent by the poster in response to a like operation of a user. As shown in FIG. 1, the information display method according to these embodiments may include the following steps:

S101: A target trigger operation of a first user is received.

The target trigger operation may be a trigger operation used to indicate the display of target feedback information, such as a trigger operation used to indicate the display of target feedback information sent by a user. Exemplarily, the target trigger operation may include an information display operation for the target feedback information, a preset page display operation for a user who has target feedback information that has not yet been displayed, and/or a media content display operation for media content posted by a user who has target feedback information that has not yet been displayed. The first user is a user who performs the target trigger operation.

In these embodiments, the first user may perform the target trigger operation. Correspondingly, a current application may receive the target trigger operation performed by the first user.

S102: The target feedback information is displayed in response to the target trigger operation, where the target feedback information is sent by a second user, the first user has performed a preset interactive operation on at least one media content posted by the second user, and the target feedback information is generated by the second user based on the preset interactive operation.

The target feedback information may be information that a media content poster (e.g., the second user) provides feedback for the received preset interactive operation, which may be generated by the poster based on the received preset interactive operation after the poster receives the preset interactive operation and is sent to a viewer performing the preset interactive operation, and is used to provide feedback for the preset interactive operation performed by the viewer. These embodiments do not limit the form of the target feedback information. Optionally, the target feedback information includes content displayed in at least one of forms of texts, voice, images, videos, or virtual resources. For example, the target feedback information may include one or more of text content, voice content, image content, video content, and virtual resource content, which may be specifically input or selected by a sender (i.e., the second user) as needed.

The second user may be a user who sends the target feedback information to the first user, or may also be a poster of media content on which the first user has performed the preset interactive operation. The second user posts one or more pieces of media content. The media content may include, for example, video content or graphic and text content. Therefore, the other user (e.g., the first user) may view the media content posted by the second user and perform the preset interactive operation on the media content posted by the second user; and after receiving the preset interactive operation performed by the other user on the posted media content, the second user may instruct the generation and sending of the target feedback information to the other user who performs the preset interactive operation, to provide feedback for the preset interactive operation performed by the other user. The preset interactive operation may be an interactive operation for the media content, and a specific form may be set as needed. For example, the preset interactive operation may be a like operation, a favorite operation, a share operation, a recommendation operation, or the like. An example in which the preset interactive operation is the like operation is used for description as below.

Specifically, after the target trigger operation of the first user is received, target feedback information 21 may be displayed in response to the target trigger operation, to facilitate the first user to view, as shown in FIG. 2.

In these embodiments, a display style of the target feedback information may be flexibly set. For example, the display style of the target feedback information may be preset. The display style of the target feedback information may also be determined according to a page type of a page where the target feedback information is displayed. In this case, optionally, the step of displaying target feedback information includes: determining a display style for displaying the target feedback information based on a page type of a current page or a preset page of the second user; and displaying the target feedback information based on the display style. Exemplarily, when the target feedback information is displayed on a message page or a personal page, the target feedback information may be displayed in the form of an overlay. For example, an overlay may be displayed on a top of original page content of the message page or the personal page, and the target feedback information is displayed on the overlay, such as displaying the target feedback information on the overlay in the form of a floating window. When the target feedback information is displayed on a chat page, the target feedback information may be displayed in the form of a chat information in a chat area on the chat page.

In these embodiments, the first user may perform the preset interactive operation on the media content posted by the second user; after receiving the preset interactive operation performed by the first user, the second user may send the feedback information for the preset interactive operation performed by the first user to the first user; and after receiving the feedback information sent by the second user, the first user may view the feedback information. Therefore, an interaction method between the first user and the second user can be enriched.

In some implementations, when the information display operation for the target feedback information is received, information content of the target feedback information may be displayed on the current page or the preset page. In this case, optionally, the target trigger operation includes the information display operation for the target feedback information. The step of displaying target feedback information includes: displaying information content of the target feedback information on a current page; or switching the current page to a preset page of the second user, and displaying the information content of the target feedback information on the preset page.

The information display operation may be a trigger operation used to instruct the display of information content of certain feedback information, such as an operation of triggering first prompt information corresponding to certain feedback information, an operation of triggering a display control corresponding to certain feedback information, or a gesture operation of performing other presetting. In this case, the target feedback information may be feedback information corresponding to the information display operation, namely feedback information that the information display operation instructs to be displayed. The current page may be understood as a page currently displayed when the target trigger operation is received, namely a page on which the information display operation acts, such as the message page. The preset page may be a certain page that is preset. Optionally, the preset page includes a personal page or a chat page. The personal page of the second user may be considered as a personal homepage of the second user. The chat page of the second user may be a chat page for the first user and the second user.

Exemplarily, when receiving the information display operation of the first user for the target feedback information on the current page, page switchover may not be performed, and the information content of the target feedback information is directly displayed on the current page; alternatively, the current page may be switched to the preset page of the second user, and the information content of the target feedback information is displayed on the preset page.

In the above implementation, the information display operation may act on the first prompt information corresponding to the target feedback information. For example, when receiving the target feedback information sent by the second user, the first prompt information corresponding to the target feedback information may be displayed, and through the first prompt information, the first user may be prompted to view the target feedback information. Therefore, the first user may perform the information display operation for the target feedback information by triggering the first prompt information, to view the information content of the target feedback information. In this case, optionally, before the step of receiving a target trigger operation of a first user, the method further includes: displaying first prompt information corresponding to the target feedback information, the first prompt information being used to prompt the first user to view the target feedback information, and the first prompt information being used to trigger execution of the information display operation. The first prompt information may be displayed in the form of a pop-up window or a notification information. When the first prompt information is displayed in the form of the notification information, the first prompt information may be displayed within the message page.

In some implementations, when the preset page corresponding to the second user is displayed, the target feedback information that is sent by the second user and has not yet been displayed may be displayed on the preset page. In this case, optionally, the target trigger operation includes a preset page display operation for the second user. The step of displaying target feedback information includes: displaying a preset page of the second user; and in response to existence of target feedback information that has not yet been displayed, displaying information content of the target feedback information on the preset page.

The preset page display operation may be a trigger operation used to instruct the display of the preset page of the second user, such as a trigger operation for switching to the preset page of the second user.

Exemplarily, when receiving a preset page display operation of the first user, the preset page of the second user may be displayed in response to the preset page display operation, and whether there is target feedback information sent by the second user corresponding to the preset page that has not yet been displayed is determined, and if yes, information content of the target feedback information is further displayed on the preset page.

For example, when receiving a preset page display operation used to instruct the display of a personal page of a second user A, the personal page of the second user A may be displayed, and whether there is target feedback information sent by the second user A that has not yet been viewed by the first user is determined. If yes, the information content of the target feedback information is further displayed on the personal page of the second user A, such as displaying original page content of the personal page on the personal page of the second user A, and displaying the information content of the target feedback information above the original page content.

For another example, when receiving a preset page display operation used to instruct the display of a chat page between the first user and the second user A, the chat page between the first user and the second user A may be displayed, and whether there is target feedback information sent by the second user A that has not yet been viewed by the first user is determined. If yes, the information content of the target feedback information is further displayed on the chat page, such as displaying the target feedback information sent by the second user A in the form of a chat information on the chat page.

In some implementations, when the first user views the media content posted by the second user, the target feedback information sent by the second user that has not yet been displayed may also be displayed. In this case, optionally, the target trigger operation includes a media content display operation for first media content posted by the second user. The step of displaying target feedback information includes: in response to existence of target feedback information that has not yet been displayed, displaying the first media content and information content of the target feedback information.

The media content display operation may be a trigger operation used to instruct the display of certain media content of the second user, such as a trigger operation of entering a detail page of certain media content, or a trigger operation for switching, on a media content display page, currently displayed media content based on a media content stream of the media content display page. The first media content may be media content corresponding to the media content display operation, namely media content that the media content display operation instructs to be displayed.

Exemplarily, when receiving the media content display operation for certain media content posted by the second user, for example, when the second user wants to view certain media content posted by the second user, whether there is target feedback information sent by the second user that has not yet been viewed by the first user may be determined. If yes, the media content and the target feedback information are displayed on the media content display page, such as displaying the target feedback information above a media content image of the media content. If not, the media content is displayed on the media content display page without displaying the target feedback information.

It should be noted that if new target feedback information sent by the second user is received within a period of displaying the preset page or the media content posted by the second user, the information content of the target feedback information may be directly displayed on the currently displayed page (e.g., the preset page or the media content display page), or may not be displayed, which may be specifically set as needed.

In these embodiments, as shown in FIG. 2, when the target feedback information 21 is displayed, if the target feedback information 21 is not displayed on the preset page of the second user, a preset control 20 configured to trigger the display of the preset page of the second user may also be further displayed, thereby facilitating the first user to switch to enter the preset page of the second user by triggering the preset control 20. In this case, optionally, the target feedback information is not displayed on the preset page, and the step of displaying target feedback information 21 includes: displaying the target feedback information 21 and the preset control 20, where the preset control 20 is configured to trigger the display of the preset page of the second user.

In these embodiments, the target trigger operation may be performed after receiving the target feedback information sent by the second user, to instruct the display of the target feedback information. In this case, before the step of receiving a target trigger operation of a first user, the method may also include: receiving the target feedback information sent by the second user.

In these embodiments, the preset interactive operation and the target trigger operation are different trigger operations. After the first user performs the preset interactive operation on the at least one media content posted by the second user, the second user may send the target feedback information to the first user, to provide feedback for the preset interactive operation performed by the first user. In this case, optionally, before the step of receiving a target trigger operation of a first user, the method further includes: performing, in response to a preset interactive operation for second media content posted by the second user, an interactive event corresponding to the preset interactive operation. The second media content may be considered as media content posted by the second user that the first user wants to perform the preset interactive operation on, and may be the same as or different from the first media content.

Taking the preset interactive operation as a like operation as an example, when a like operation of the first user on certain media content posted by the second user, the media content may be switched to a liked state from an unliked state, such as switching a style of a like control corresponding to the media content and/or adding the media content to a liked media content list of the first user.

According to the information display method according to these embodiments, the target trigger operation of the first user is received; and in response to the target trigger operation, the target feedback information is displayed and is sent by the second user, the first user has performed the preset interactive operation on the at least one media content posted by the second user, and the target feedback information is generated by the second user based on the preset interactive operation. According to these embodiments, by adopting the above technical solution, a creator may send the feedback information to the corresponding viewer after receiving the preset interactive operation performed by the viewer for the posted media content. Correspondingly, the viewer may view the feedback information sent by the creator, thereby enriching the interaction method between the creator and the viewer.

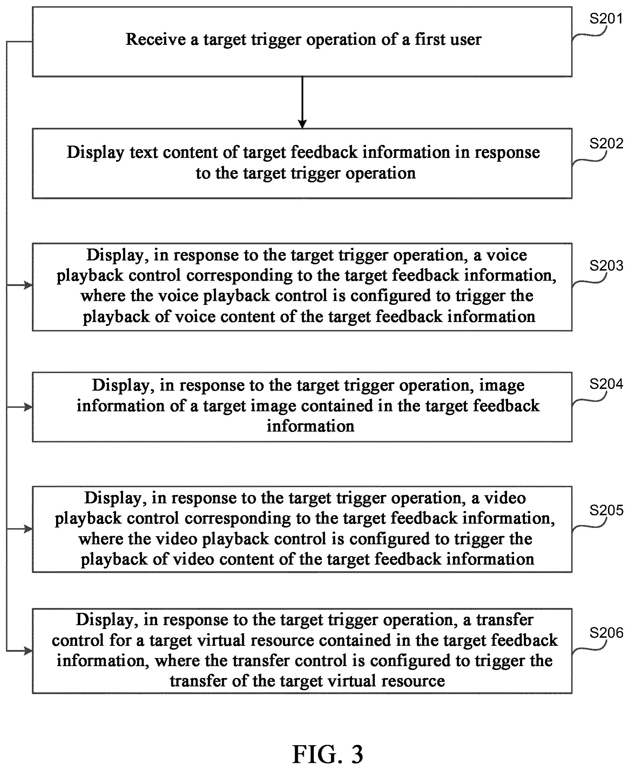

FIG. 3 is a schematic flowchart of another information display method according to embodiments of the present disclosure. The solution in these embodiments may be combined with one or more optional solutions in the above embodiment. Optionally, the step of displaying target feedback information includes at least one of the following: displaying text content of the target feedback information; displaying a voice playback control corresponding to the target feedback information, the voice playback control being configured to trigger playback of voice content of the target feedback information; displaying image information of a target image contained in the target feedback information; displaying a video playback control corresponding to the target feedback information, the video playback control being configured to trigger playback of video content of the target feedback information; or displaying a transfer control for a target virtual resource contained in the target feedback information, the transfer control being configured to trigger transfer of the target virtual resource.

Correspondingly, as shown in FIG. 3, the information display method according to these embodiments may include the following steps:
S201: A target trigger operation of a first user is received, and at least one of S202 to S206 is performed.

S202: Text content of target feedback information is displayed in response to the target trigger operation.

In these embodiments, as shown in FIG. 2, when the target feedback information 21 includes the text content, the text content contained in the target feedback information 21 may be displayed in response to the target trigger operation to be viewed by the first user.

S203: In response to the target trigger operation, a voice playback control corresponding to the target feedback information is displayed, where the voice playback control is configured to trigger the playback of voice content of the target feedback information.

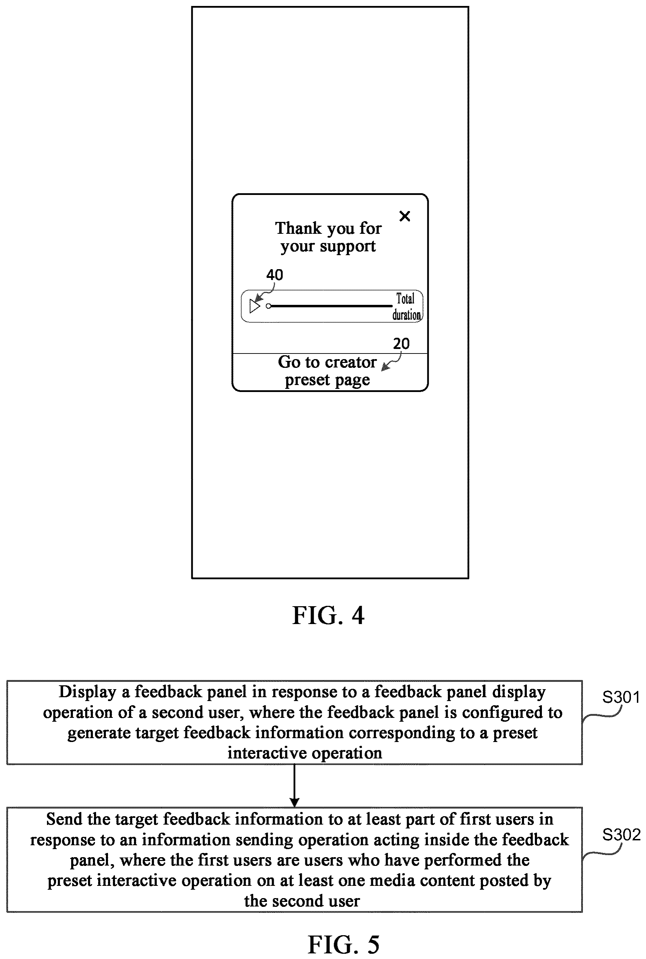

In these embodiments, as shown in FIG. 4, when the target feedback information includes the voice content, a voice playback control 40 corresponding to the target feedback information may be displayed in response to the target trigger operation. Therefore, the first user may instruct a current application to play the voice content contained in the target feedback information by triggering the voice playback control 40. The preset control 20 is configured to trigger the display of the preset page of the second user.

It should be understood that according to these embodiments, when receiving the target trigger operation, the voice content contained in the target feedback information is directly played without the need for the user to trigger the voice playback control, which may be specifically set as needed.

S204: In response to the target trigger operation, image information of a target image contained in the target feedback information is displayed.

In these embodiments, when the target feedback information includes the image content, the image information of the image contained in the target feedback information may be displayed in response to the target trigger operation.

The target image may be understood as an image contained in the target feedback information, which may be a static image or a dynamic image. The image information of the target image may include, for example, image content, an image name, or a thumbnail of the target image. When the image information of the target image is the image name and/or the thumbnail of the target image, the first user may view the target image by triggering the image information.

S205: In response to the target trigger operation, a video playback control corresponding to the target feedback information is displayed, where the video playback control is configured to trigger the playback of video content of the target feedback information.

In these embodiments, when the target feedback information includes the video content, the video playback control corresponding to the target feedback information may be displayed in response to the target trigger operation. Therefore, the first user may instruct the current application to play the video content contained in the target feedback information by triggering the video playback control.

It should be understood that according to these embodiments, when receiving the target trigger operation, the video content contained in the target feedback information may also be directly played without the need for the user to trigger the video playback control, which may be specifically set as needed.

S206: In response to the target trigger operation, a transfer control for a target virtual resource contained in the target feedback information is displayed, where the transfer control is configured to trigger the transfer of the target virtual resource.

The target virtual resource may be understood as a virtual resource contained in the target feedback information, which may be, for example, coins or points. The transfer control may be a control configured to instruct the acquisition of the target virtual resource. Taking the target feedback information being a red envelope as an example, the transfer control may be an open control for the red envelope, so that the first user may open the red envelope by triggering the open control, thereby acquiring a virtual resource in the red envelope.

In these embodiments, when the target feedback information contains the virtual resource, the transfer control for the virtual resource contained in the target feedback information may be displayed in response to the target trigger operation. Therefore, the first user may acquire at least part of the virtual resource contained in the target feedback information by triggering the transfer control.

According to the information display method according to these embodiments, the interaction method between the creator and the viewer can be enriched while further enriching the content contained in the feedback information and a display form of the feedback information, thereby improving user experience.

FIG. 5 is a schematic flowchart of an information sending method according to embodiments of the present disclosure. The method may be performed by an information sending apparatus. The apparatus may be implemented by software and/or hardware, may be configured in an electronic device, and typically, may be configured in a mobile phone or a tablet personal computer. The information sending method according to these embodiments of the present disclosure is applicable to a scenario where a poster provides feedback for a viewer who has performed a preset interactive operation on posted media content. As shown in FIG. 5, the information sending method according to these embodiments may include the following steps:

S301: A feedback panel is displayed in response to a feedback panel display operation of a second user, where the feedback panel is configured to generate target feedback information corresponding to a preset interactive operation.

The feedback panel display operation may be a trigger operation used to instruct the display of the feedback panel, such as a trigger operation of triggering second prompt information or a feedback panel display control, or a gesture operation of performing other presetting. The feedback panel may be a panel configured to generate the target feedback information corresponding to the preset interactive operation to allow the second user to provide feedback for at least part of first users who have performed the preset interactive operation on posted media content. The second user may be a user who performs the feedback panel display operation and who has received the preset interactive operation for the posted media content.

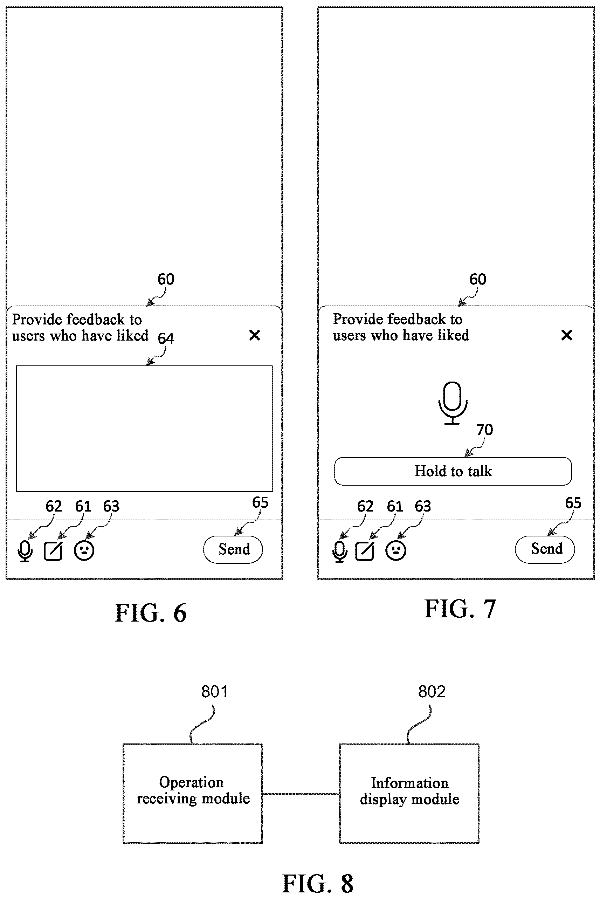

In these embodiments, as shown in FIG. 6 (in the figure, the preset interactive operation is exemplified as a like operation), a feedback panel 60 may be displayed based on the feedback panel display operation of the second user, thereby allowing the second user to provide feedback for at least part of first users who have performed the preset interactive operation on the posted media content.

In these embodiments, the feedback panel may support the generation of different forms of target feedback information, and these embodiments do not limit the form. Optionally, the feedback panel supports the generation of the target feedback information in at least one of forms of texts, voice, images, videos, or virtual resources.

Exemplarily, the feedback panel 60 may display controls such as a text control 61, a voice control 62, an image control 63, a video control (not shown in the figure), and/or a virtual resource control (not shown in the figure). Therefore, the second user may instruct a current application to display a text input area 64 (as shown in FIG. 6) by triggering the text control 61, thereby inputting text content in the text input area 64; instruct the current application to display a voice recording control 70 (as shown in FIG. 7, the preset interactive operation is exemplified as a like operation in the figure) by triggering the voice control 62, to record voice content by triggering the voice recording control 70; add an image by triggering the image control 63, such as an emoticon, and a photo taken or drawn by the second user; switch to a video shooting page by triggering the video control to shoot video content that provides feedback for at least part of first users who have performed the preset interactive operation; and/or, add a virtual resource by triggering the virtual resource control, to send the added virtual resource to at least part of first users who have performed the preset interactive operation, and so on.

In some implementations, before the step of displaying a feedback panel in response to a feedback panel display operation of a second user, the method further includes: displaying second prompt information, where the second prompt information is used to prompt the second user to send the target feedback information, and the second prompt information is used to trigger the execution of the feedback panel display operation.

In the above implementation, the second prompt information may be displayed, and therefore, through the second prompt information, the second user is prompted to send the target feedback information to at least part of first users who have performed the preset interactive operation on the posted media content.

Exemplarily, the second prompt information may be displayed when the user meets a first preset condition for sending the target feedback information. For example, when the user receives preset interactive operations performed by more than m users in recent n days, the second prompt information may be displayed on the message page, thereby prompting the user to provide feedback for the first users who have performed the preset interactive operation. Therefore, when it is detected that the user triggers the displayed second prompt information, it may be determined that the feedback panel display operation is received, and the feedback panel is displayed in response to the feedback panel display operation, thereby allowing the user to generate feedback information to be sent through the feedback panel. Herein, n and m are positive integers, and specific values may be set as needed.

S302: The target feedback information is sent to at least part of first users in response to an information sending operation acting inside the feedback panel, where the first users are users who have performed the preset interactive operation on at least one media content posted by the second user.

The information sending operation may be a trigger operation used to instruct the sending of the target feedback information, such as an operation of triggering a sending control in the feedback panel.

Specifically, when receiving the information sending operation of the second user, such as detecting that the second user triggers a sending control 65 (as shown in FIG. 6 and FIG. 7) displayed in the feedback panel 60, the target feedback information generated in the feedback panel 60 may be sent to at least part of first users who have performed the preset interactive operation on at least one media content posted by the second user, such as sending the target feedback information input/recorded/shot by the second user through the feedback panel 60.

In these embodiments, the second user may send the target feedback information to at least part of users meeting a second preset condition that have performed the preset interactive operation, such as sending the target feedback information to first users who have performed the preset interactive operation on at least one media content of the second user in recent n days but have not received feedback from the second user in recent n days; or sending the target feedback information to first users who have performed the preset interactive operation on at least one media content of the second user in recent n days but have not received feedback from the second user in recent n days and have followed the second user, or the like.

In these embodiments, the form of sending the target feedback information may be flexibly set, such as sending the target feedback information in the form of a chat information and/or a notification information. In this case, optionally, the step of sending the target feedback information to at least part of first users includes at least one of the following: sending the target feedback information to at least part of first users in the form of the chat information; or sending the target feedback information to at least part of first users in the form of the notification information.

According to the information display method according to these embodiments, the feedback panel is displayed in response to the feedback panel display operation of the second user, where the feedback panel is configured to generate the target feedback information corresponding to the preset interactive operation; and in response to the information sending operation acting inside the feedback panel, the generated target feedback information is sent to at least part of the first users, where the first users are users who have performed the preset interactive operation on at least one media content posted by the second user. According to these embodiments, by adopting the above technical solution, a creator may send the feedback information to the corresponding viewer after receiving the preset interactive operation performed by the viewer for the posted media content, thereby enriching the interaction method between the creator and the viewer.

FIG. 8 is a block diagram of a structure of an information display apparatus according to embodiments of the present disclosure. The apparatus may be implemented by software and/or hardware, may be configured in an electronic device, and typically, may be configured in a mobile phone or a tablet personal computer. By performing an information display method, feedback information sent by a poster to a viewer who has performed a preset interactive operation on posted media content may be displayed. As shown in FIG. 8, the information display apparatus according to these embodiments may include an operation receiving module 801 and an information display module 802.

The operation receiving module 801 is configured to receive a target trigger operation of a first user; and
the information display module 802 is configured to display target feedback information in response to the target trigger operation, the target feedback information being sent by a second user, the first user having performed a preset interactive operation on at least one media content posted by the second user, and the target feedback information being generated by the second user based on the preset interactive operation.

According to the information display apparatus according to these embodiments, the operation receiving module receives the target trigger operation of the first user; and the information display module displays the target feedback information in response to the target trigger operation, where the target feedback information is sent by the second user, the first user has performed the preset interactive operation on the at least one media content posted by the second user, and the target feedback information is generated by the second user based on the preset interactive operation. According to these embodiments, by adopting the above technical solution, a creator may send feedback information to the corresponding viewer after receiving the preset interactive operation performed by the viewer for the posted media content. Correspondingly, the viewer may view the feedback information sent by the creator, thereby enriching an interaction method between the creator and the viewer.

In the above solution, the target trigger operation may include an information display operation for the target feedback information. The information display module 802 may be configured to: display information content of the target feedback information on a current page; or switch the current page to a preset page of the second user, and display the information content of the target feedback information on the preset page.

Further, the information display apparatus according to these embodiments may further include: a first prompt module, configured to display first prompt information corresponding to the target feedback information, the first prompt information being used to prompt the first user to view the target feedback information, and the first prompt information being used to trigger execution of the information display operation.

In the above solution, the target trigger operation may include a preset page display operation for the second user. The information display module 802 may be configured to: display a preset page of the second user; and in response to existence of target feedback information that has not yet been displayed, display information content of the target feedback information on the preset page.

In the above solution, the preset page may include a personal page or a chat page.

In the above solution, the target trigger operation may include a media content display operation for first media content posted by the second user. The information display module 802 may be configured to: in response to existence of target feedback information that has not yet been displayed, display the first media content and information content of the target feedback information.

In the above solution, the target feedback information may not be displayed on the preset page, and the information display module 802 may be configured to: display the target feedback information and a preset control, the preset control being configured to trigger display of a preset page of the second user.

Further, the information display apparatus according to these embodiments may further include: an information receiving module, configured to receive the target feedback information sent by the second user before the receiving a target trigger operation of a first user.

Further, the information display apparatus according to these embodiments may further include: an interaction module, configured to perform, in response to a preset interactive operation for second media content posted by the second user, an interactive event corresponding to the preset interactive operation before the receiving a target trigger operation of a first user.

In the above solution, the target feedback information may include content displayed in at least one form of texts, voice, images, videos, or virtual resources.

In the above solution, the information display module 802 may include: a style determination unit, configured to a display style for displaying the target feedback information based on a page type of a current page or a preset page of the second user; and an information display unit, configured to display the target feedback information based on the display style.

In the above solution, the information display module 802 may perform at least one of: displaying text content of the target feedback information; displaying a voice playback control corresponding to the target feedback information, the voice playback control being configured to trigger playback of voice content of the target feedback information; displaying image information of a target image contained in the target feedback information; displaying a video playback control corresponding to the target feedback information, the video playback control being configured to trigger playback of video content of the target feedback information; or displaying a transfer control for a target virtual resource contained in the target feedback information, the transfer control being configured to trigger transfer of the target virtual resource.

The information display apparatus according to these embodiments of the present disclosure may perform the information display method according to any embodiment of the present disclosure, and has the corresponding functional modules and beneficial effects for performing the information display method. For technical details that are not described in detail in these embodiments, reference may be made to the information display method according to any embodiment of the present disclosure.

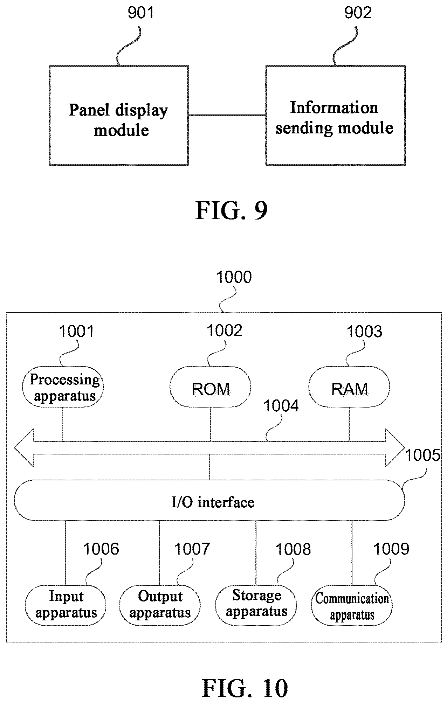

FIG. 9 is a block diagram of a structure of an information sending apparatus according to embodiments of the present disclosure. The apparatus may be implemented by software and/or hardware, may be configured in an electronic device, typically, may be configured in a mobile phone or a tablet personal computer, and is applicable to a scenario where feedback is provided for a viewer who has performed a preset interactive operation by performing an information sending method. As shown in FIG. 9, the information sending apparatus according to these embodiments may include: a panel display module 901 and an information sending module 902.

The panel display module 901 is configured to display a feedback panel in response to a feedback panel display operation of a second user, the feedback panel being configured to generate target feedback information corresponding to a preset interactive operation; and
the information sending module 902 is configured to send the target feedback information to at least part of first users in response to an information sending operation acting inside the feedback panel, the first users being users who have performed the preset interactive operation on at least one media content posted by the second user.

According to the information display apparatus according to these embodiments, the panel display module displays the feedback panel in response to the feedback panel display operation of the second user, where the feedback panel is configured to generate the target feedback information corresponding to the preset interactive operation; and the information sending module sends the generated target feedback information to the at least part of first users in response to the information sending operation acting inside the feedback panel, where the first users are the users who have performed the preset interactive operation on the at least one media content posted by the second user. According to these embodiments, by adopting the above technical solution, after receiving the preset interactive operation performed by the viewer for the posted media content, a creator may send feedback information to the viewer, thereby enriching an interaction method between the creator and the viewer.

In the above solution, the information sending module 902 may be configured to perform at least one of: sending the target feedback information to at least part of the first users in a form of chat information; or sending the target feedback information to at least part of the first users in a form of notification information.

Further, the information sending apparatus according to these embodiments may further include: a second prompt module, configured to display second prompt information, the second prompt information being used to prompt the second user to send the target feedback information, and the second prompt information being used to trigger execution of the feedback panel display operation.

In the above solution, the feedback panel may support the generation of the target feedback information in at least one form of texts, voice, images, videos, or virtual resources.

The information sending apparatus according to these embodiments of the present disclosure may perform the information sending method according to any embodiment of the present disclosure, and has the corresponding functional modules and beneficial effects for performing the information sending method. For technical details that are not described in detail in these embodiments, reference may be made to the information sending method according to any embodiment of the present disclosure.

Referring to FIG. 10 below, FIG. 10 illustrates a schematic diagram of a structure of an electronic device (e.g., a terminal device) 1000 suitable for implementing embodiments of the present disclosure. The terminal device in these embodiments of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 10 is merely an example, and should not impose any limitation on the function and scope of use of the embodiments of the present disclosure.

As shown in FIG. 10, the electronic device 1000 may include a processing apparatus (e.g., a central processing unit and a graphics processing unit) 1001 that may perform a variety of appropriate actions and processing according to a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to one another through a bus 1004. An input/output (I/O) interface 1005 is also connected to the bus 1004.

Typically, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a magnetic tape and a hard drive; and a communication apparatus 1009. The communication apparatus 1009 may allow the electronic device 1000 to be in wireless or wired communication with other devices for data exchange. Although FIG. 10 shows the electronic device 1000 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, embodiments of the present disclosure include a computer program product, which includes a computer program carried on a non-transitory computer-readable medium, where the computer program includes program code for performing the method shown in the flowchart. In these embodiments, the computer program may be downloaded and installed from the network through the communication apparatus 1009, installed from the storage apparatus 1008, or installed from the ROM 1002. The computer program, when executed by the processing apparatus 1001, performs the above functions limited in the method in these embodiments of the present disclosure.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to: receive a target trigger operation of a first user; and display target feedback information in response to the target trigger operation, where the target feedback information is sent by a second user, the first user has performed a preset interactive operation on at least one media content posted by the second user, and the target feedback information is generated by the second user based on the preset interactive operation; alternatively, display a feedback panel in response to a feedback panel display operation of a second user, where the feedback panel is configured to generate target feedback information corresponding to a preset interactive operation; and send the target feedback information to at least part of first users in response to an information sending operation acting inside the feedback panel, where the first users are users who have performed the preset interactive operation on at least one media content posted by the second user.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the module does not limit the module itself in certain cases.

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, Example 1 provides an information display method, including:
receiving a target trigger operation of a first user; and
displaying target feedback information in response to the target trigger operation, the target feedback information being sent by a second user, the first user having performed a preset interactive operation on at least one media content posted by the second user, and the target feedback information being generated by the second user based on the preset interactive operation.

According to one or more embodiments of the present disclosure, Example 2 provides the method according to Example 1, where the target trigger operation includes an information display operation for the target feedback information, and the displaying target feedback information includes:
displaying information content of the target feedback information on a current page; or
switching the current page to a preset page of the second user, and displaying the information content of the target feedback information on the preset page.

According to one or more embodiments of the present disclosure, Example 3 provides the method according to Example 2, where before the receiving a target trigger operation of a first user, the method further includes:
displaying first prompt information corresponding to the target feedback information, the first prompt information being used to prompt the first user to view the target feedback information, and the first prompt information being used to trigger execution of the information display operation.

According to one or more embodiments of the present disclosure, Example 4 provides the method according to Example 1, where the target trigger operation includes a preset page display operation for the second user, and the displaying target feedback information includes:
displaying a preset page of the second user; and
in response to existence of target feedback information that has not yet been displayed, displaying information content of the target feedback information on the preset page.

According to one or more embodiments of the present disclosure, Example 5 provides the method according to any of Examples 2 to 4, where the preset page includes a personal page or a chat page.

According to one or more embodiments of the present disclosure, Example 6 provides the method according to Example 1, where the target trigger operation includes a media content display operation for first media content posted by the second user, and the displaying target feedback information includes:

in response to existence of target feedback information that has not yet been displayed, displaying the first media content and information content of the target feedback information.

According to one or more embodiments of the present disclosure, Example 7 provides the method according to Example 1, where the target feedback information is not displayed on the preset page, and the displaying target feedback information includes:
displaying the target feedback information and a preset control, the preset control being configured to trigger display of a preset page of the second user.

According to one or more embodiments of the present disclosure, Example 8 provides the method according to any of Examples 1 to 4 and Examples 6 to 7, where before the receiving a target trigger operation of a first user, the method further includes:
receiving target feedback information sent by the second user.

According to one or more embodiments of the present disclosure, Example 9 provides the method according to any of Examples 1 to 4 and Examples 6 to 7, where before the receiving a target trigger operation of a first user, the method further includes:
performing, in response to a preset interactive operation for second media content posted by the second user, an interactive event corresponding to the preset interactive operation.

According to one or more embodiments of the present disclosure, Example 10 provides the method according to any of Examples 1 to 4 and Examples 6 to 7, where the target feedback information includes content displayed in at least one form of texts, voice, images, videos, or virtual resources.

According to one or more embodiments of the present disclosure, Example 11 provides the method according to Example 10, where the displaying target feedback information includes:
determining a display style for displaying the target feedback information based on a page type of a current page or a preset page of the second user; and
displaying the target feedback information based on the display style.

According to one or more embodiments of the present disclosure, Example 12 provides the method according to Example 10, where the displaying target feedback information includes at least one of the following:
displaying text content of the target feedback information;
displaying a voice playback control corresponding to the target feedback information, the voice playback control being configured to trigger playback of voice content of the target feedback information;
displaying image information of a target image contained in the target feedback information;
displaying a video playback control corresponding to the target feedback information, the video playback control being configured to trigger playback of video content of the target feedback information; or
displaying a transfer control for a target virtual resource contained in the target feedback information, the transfer control being configured to trigger transfer of the target virtual resource.

According to one or more embodiments of the present disclosure, Example 13 provides an information sending method, including:
displaying a feedback panel in response to a feedback panel display operation of a second user, the feedback panel being configured to generate target feedback information corresponding to a preset interactive operation; and
sending the target feedback information to at least part of first users in response to an information sending operation acting inside the feedback panel, the first users being users who have performed the preset interactive operation on at least one media content posted by the second user.

According to one or more embodiments of the present disclosure, Example 14 provides the method according to Example 13, where the sending the target feedback information to at least part of first users includes at least one of the following:
sending the target feedback information to at least part of the first users in a form of chat information; or
sending the target feedback information to at least part of the first users in a form of notification information.

According to one or more embodiments of the present disclosure, Example 15 provides the method according to Example 13, where before the displaying a feedback panel in response to a feedback panel display operation of a second user, the method further includes:
displaying second prompt information, the second prompt information being used to prompt the second user to send the target feedback information, and the second prompt information being used to trigger execution of the feedback panel display operation.

According to one or more embodiments of the present disclosure, Example 16 provides the method according to any of Examples 13 to 15, where the feedback panel supports the generation of the target feedback information in at least one form of texts, voice, images, videos, or virtual resources.

According to one or more embodiments of the present disclosure, Example 17 provides an information display apparatus, including:
an operation receiving module, configured to receive a target trigger operation of a first user; and
an information display module, configured to display target feedback information in response to the target trigger operation, the target feedback information being sent by a second user, the first user having performed a preset interactive operation on at least one media content posted by the second user, and the target feedback information being generated by the second user based on the preset interactive operation.

According to one or more embodiments of the present disclosure, Example 18 provides an information sending apparatus, including:
a panel display module, configured to display a feedback panel in response to a feedback panel display operation of a second user, the feedback panel being configured to generate target feedback information corresponding to a preset interactive operation; and
an information sending module, configured to send the target feedback information to at least part of first users in response to an information sending operation acting inside the feedback panel, the first users being users who have performed the preset interactive operation on at least one media content posted by the second user.

According to one or more embodiments of the present disclosure, Example 19 provides an electronic device, including:
one or more processors; and
a memory, configured to store one or more programs, where
the one or more programs, when executed by the one or more processors, cause the one or more processors to implement the information display method according to any of Examples 1 to 12, or the information sending method according to any one of Examples 13 to 16.

According to one or more embodiments of the present disclosure, Example 20 provides a computer-readable storage medium, having a computer program stored therein, where the program, when executed by a processor, implements the information display method according to any of Examples 1 to 12, or the information sending method according to any of Examples 13 to 16.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable sub combination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. An information display method, comprising:
receiving a target trigger operation of a first user; and
displaying target feedback information in response to the target trigger operation, the target feedback information being sent by a second user, the first user having performed a preset interactive operation on at least one media content posted by the second user, and the target feedback information being generated by the second user based on the preset interactive operation.

2. The method according to claim 1, wherein the target trigger operation comprises an information display operation for the target feedback information, and displaying the target feedback information comprises:
displaying information content of the target feedback information on a current page; or
switching the current page to a preset page of the second user, and displaying the information content of the target feedback information on the preset page.

3. The method according to claim 2, wherein before receiving the target trigger operation of the first user, the method further comprises:
displaying first prompt information corresponding to the target feedback information, the first prompt information being used to prompt the first user to view the target feedback information, and the first prompt information being used to trigger execution of the information display operation.

4. The method according to claim 1, wherein the target trigger operation comprises a preset page display operation for the second user, and displaying the target feedback information comprises:
displaying a preset page of the second user; and
in response to existence of target feedback information that has not yet been displayed, displaying information content of the target feedback information on the preset page.

5. The method according to any of claims 2 to 4, wherein the preset page comprises a personal page or a chat page.

6. The method according to claim 1, wherein the target trigger operation comprises a media content display operation for first media content posted by the second user, and displaying the target feedback information comprises:
in response to existence of target feedback information that has not yet been displayed, displaying the first media content and information content of the target feedback information.

7. The method according to claim 1, wherein the target feedback information is not displayed on a preset page, and displaying the target feedback information comprises:
displaying the target feedback information and a preset control, the preset control being configured to trigger display of a preset page of the second user.

8. The method according to any of claims 1 to 4 and 6 to 7, wherein before receiving the target trigger operation of the first user, the method further comprises:
receiving target feedback information sent by the second user.

9. The method according to any of claims 1 to 4 and 6 to 7, wherein before receiving the target trigger operation of the first user, the method further comprises:
performing, in response to a preset interactive operation for second media content posted by the second user, an interactive event corresponding to the preset interactive operation.

10. The method according to any of claims 1 to 4 and 6 to 7, wherein the target feedback information comprises content displayed in at least one form of text, voice, image, video, or virtual resource.

11. The method according to claim 10, wherein displaying the target feedback information comprises:
determining a display style for displaying the target feedback information based on a page type of a current page or a preset page of the second user; and
displaying the target feedback information based on the display style.

12. The method according to claim 10, wherein displaying the target feedback information comprises at least one of:
displaying text content of the target feedback information;
displaying a voice playback control corresponding to the target feedback information, the voice playback control being configured to trigger playback of voice content of the target feedback information;
displaying image information of a target image contained in the target feedback information;
displaying a video playback control corresponding to the target feedback information, the video playback control being configured to trigger playback of video content of the target feedback information; or
displaying a transfer control for a target virtual resource contained in the target feedback information, the transfer control being configured to trigger transfer of the target virtual resource.

13. An information sending method, comprising:
displaying a feedback panel in response to a feedback panel display operation of a second user, the feedback panel being configured to generate target feedback information corresponding to a preset interactive operation; and
sending the target feedback information to at least part of first users in response to an information sending operation acting inside the feedback panel, the first users being users who have performed the preset interactive operation on at least one media content posted by the second user.

14. The method according to claim 13, wherein sending the target feedback information to at least part of the first users comprises at least one of:
sending the target feedback information to at least part of the first users in a form of chat information; or
sending the target feedback information to at least part of the first users in a form of notification information.

15. The method according to claim 13, wherein before displaying the feedback panel in response to the feedback panel display operation of the second user, the method further comprises:
displaying second prompt information, the second prompt information being used to prompt the second user to send the target feedback information, and the second prompt information being used to trigger execution of the feedback panel display operation.

16. The method according to any of claims 13 to 15, wherein the feedback panel supports generation of the target feedback information in at least one form of text, voice, image, video, or virtual resource.

17. An information display apparatus, comprising:
an operation receiving module, configured to receive a target trigger operation of a first user; and
an information display module, configured to display target feedback information in response to the target trigger operation, the target feedback information being sent by a second user, the first user having performed a preset interactive operation on at least one media content posted by the second user, and the target feedback information being generated by the second user based on the preset interactive operation.

18. An information sending apparatus, comprising:
a panel display module, configured to display a feedback panel in response to a feedback panel display operation of a second user, the feedback panel being configured to generate target feedback information corresponding to a preset interactive operation; and
an information sending module, configured to send the target feedback information to at least part of first users in response to an information sending operation acting inside the feedback panel, the first users being users who have performed the preset interactive operation on at least one media content posted by the second user.

19. An electronic device, comprising:
at least one processor; and
a memory communicatively connected to the at least one processor, wherein
the memory stores a computer program executable by the at least one processor, and the computer program, when executed by the at least one processor, causes the at least one processor to perform the information display method according to any of claims 1 to 12 or the information sending method according to any of claims 13 to 16.

20. A computer-readable storage medium, the computer-readable storage medium storing computer instructions, wherein the computer instructions, when executed by a processor, are configured to implement the information display method according to any of claims 1 to 12 or the information sending method according to any of claims 13 to 16.
